Europäisches Patentamt

European Patent Office

Office européen des brevets

(11) Numéro de publication: **0 390 719**
**A2**

## DEMANDE DE BREVET EUROPEEN

(21) Numéro de dépôt: **90500032.9**

(22) Date de dépôt: **29.03.90**

(51) Int. Cl.5: **B29C 67/14, E04D 3/32**

(30) Priorité: **30.03.89 ES 8901111**

(43) Date de publication de la demande:
**03.10.90 Bulletin 90/40**

(84) Etats contractants désignés:
**AT BE CH DE FR GB GR IT LI LU NL SE**

(71) Demandeur: **INDUSTRIAS COPINO, S.A.**
**Guasp. 78**
**E-07007 Palma de Mallorca(ES)**

(72) Inventeur: **Comas Tous, Juan**
**Guasp 78**
**E-07007 Palma de Mallorca(ES)**

(74) Mandataire: **De la Fuente Fernandez, Dionisio**
**Europatent, S.A. Santa Engracia num. 4-5**
**E-28010 Madrid(ES)**

(54) **Procédé de fabrication de couvertures pour toitures de grandes surfaces.**

(57) Procédé de fabrication de couvertures pour des toitures de grandes surfaces, caractérisé par la mise en place, constitué par la mise en place sur un moule de la forme et des dimensions appropriées, d'une toile empêchant l'adhérence de la couverture, sur laquelle on procède à peindre avec un gel, et sur cette peinture une fois sèche on procède à mettre en place une couche de fibre en verre avec du polyester, et ensuite une couche de matériau textil pressure de faible poids, et sur celle-ci une autre couche de fibre en verre semblable à la précédente, tout en pouvant placer toutes les couches pareilles successives nécessaires en fonction de la résistance à obtenir. Des additifs agissant comme sécheur durcisseur sont appliqués dans chacune des couches, en fonction de la température et l'humidité ambiante, afin d'obtenir dans chacun des cas les caractéristiques calculées pour le produit à obtenir.

EP 0 390 719 A2

# PROCEDE DE FABRICATION DE COUVERTURES POUR TOITURES DE GRANDES SURFACES

Procédé de fabrication de. couvertures pour toitures de grandes surfaces, constitué par la mise en place sur une moule de la forme et dimensions appropriées d'une toile empêchant l'adhérence de la couverture, sur laquelle on procède à peindre avec un gel, et sur cette peinture une fois sèche on met en place une couche de fibre de verre avec du polyester, et ensuite une couche de fibre en verre semblable à la précedente, tout en pouvant mettre des toutes les couches successives nécessaires égales, en fonction de la résistance à obtenir. Des additifs agissant comme sécheur-durcisseur sont appliqués dans chaque couche, en fonction de la température et l'humidité ambiante, afin d'obtenir à tout moment les caractéristiques calculées pour le produit à obtenir.

## ETAT DE LA TECHNIQUE

Les couvertures pour toitures de grandes surfaces qui sont construites actuellement, sont constituées le plus souvent à base de produits céramiques, fibrociments et similaires dont le procédé de fabrication est largement connu.

Dans certains cas on emploie des couvertures en matériaux plastiques, mais pour des petites surfaces seulement, lesquelles sont fabriquées par des procédés normaux et communs à ce type de matériaux, raison pour laquelle il n'y a aucun type de procédé, actuellement sur le marché, de fabrication spécifique pour l'obtention de couvertures spéciales matérielles pour couvertures de grandes surfaces.

## DESCRIPTION

Le procédé de fabrication de couvertures pour toitures de grandes surfaces objet de la présente invention, est entièrement nouveau en ce qui concerne sa conception ainsi que les matériaux qui sont utilisés et la façon de les appliquer, comportant en général, une série d'étapes consécutives dans lesquelles on utilise successivement divers matériaux, pour l'obtention d'un matériau léger mais à grande résistance et ayant la possibilité de mise en place comme couverture de grandes surfaces, sans avoir besoin de points d'appui intermédiaires.

Essentiellement ce procédé consiste en mettre en place sur une moule ondulée, de dimensions appropriées dans chacun des cas, une première couche formée par une toile empêchant que le reste des matériaux mis en place ensuite puisse adhérer au moule, et ensuite on procède, dans une première étape du procédé à placer une couche de peinture de couleur appropriée, du type gel, en épaisseur correspondant aux caractéristiques de température et humidité ambiante, sur laquelle une fois sèche, on procède à mettre en place une couche de fibre en verre avec du polyester.

Sur cette couche de fibre en verre on place ensuite une couche de matériau textil pressuré, gros et de poids léger, pour ensuite procéder à placer une deuxième couche de fibre en verre similaire à la précédente.

Toutes ces opérations son effectuées sans solution de continuité afin d'obtenir le maximum d'homogéneité dans la surface obtenue, laquelle une fois sèche est déjà prête pour son utilisation sans besoin d'autres opérations.

Tous les élements employés comportent un sécheur-durcisseur en quantités en raison des caractéristiques de témparature et humidité ambiante, toutefois celles-ci n'ont qu'une influence sur l'obtention de la couverture avec ses caractéristiques plus appropriées pour l'utilisation à laquelle sont affectés.

Ces couvertures, étant donnée leur spéciale constitution de matériaux très légers et ayant une grande résistance à tout type de charges, ainsi qu'aux agents atmosphériques, permettent leurs utilisation sur des grandes surfaces avec un montage facile, sans appuis intermédiaires et une sécurité totale.

Ensuite description détaillée du procédé ci-dessus sera faite, en faisant référence au plan joint dans lequel est représenté, à simple titre d'exemple, non limitatif, une forme préférentielle de réalisation, susceptible de toutes ces variations de détail ne constituant pas une altération fondamentale des caractéristiques essentielles de ce procédé.

Dans ce plan est illustrée une section schématique d'une partie de la couverture, tout en précisant les plusieurs couches le composant.

Suivant l'exemple d'exécution représenté, le procédé de fabrication de couvertures pour toitures de grandes surfaces préconisé, consiste en placer sur un moule (1) ondulé, conformément aux dimensions de courbature et ondulation à obtenir dans le produit terminé, premièrement une couche de toile forte et résistante, afin que les éléments suivants à mettre en place n'adhérent pas au moule et afin de permettre un détachement facile une fois terminé.

Sur cette toile (1) il est procédé à placer une couche (2) de peinture de type gel de la couleur appropriée en fonction du résultat à obtenir, en la laissant ensuite sécher à la température ambiante, et procéder à la deuxième étape du procédé consistant en l'application d'une couche (3) de fibre en verre avec du polyester de l'épaisseur correspondante à la moitié de l'épaisseur correspondante du produit terminé, et ensuite sur cette couche de fibre en verre on place une couche (4) d'un produit textil pressuré, gros et de poids très léger conformant la trame résistante de l'ensemble, sur laquelle on procède ensuite à placer une deuxième couche de fibre en verre parcille à la précédente.

Afin d'obtenir un séchage approprié, il est inclus un sécheur-durcisseur dans tous les produits, qu'on emploie en proportion en raison de la température et l'humidité ambiante à l'objet qu'à tout moment soit obtenue la résistance qu'on prétend.

Aussi bien la courbature longitudinale, la largeur des canaux, la grosseur de la couverture, le nombre de couches à mettre en place que le type de matériaux employés seront en fonction du calcul des résistances à prévoir dans chacun des cas, ce qui ne constituera pas une variation des différentes étapes du procédé qui a été décrit, toutefois que ce dernier répond aux différentes étapes de mise en place des couches de fibre en verre et matiére textile pressurée, car la première couche de toile a seulement pour but l'empêchement de l'adhérence de la couverture au moule, et une fois extrait le produit terminé du moule, cette étape est supprimée, en laissant comme face vue la correspondante à la couche de peinture (2) qui a été employée.

La forme, les matériaux et les dimensions pourront êtres variables de même que tout ce qui soit accessoire et secondaire, pourvu qu'ils ne changent ou modifient pas le caractère essentiel du procédé décrit.

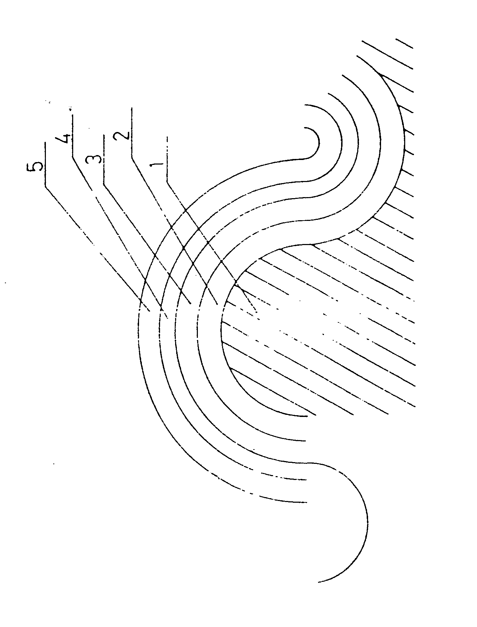

## Revendications

1.- Procédé de fabrication de couvertures pour des toitures de grandes surfaces, caractérisé par la mise en place, dans une première étape, sur un moule à surface ondulée et à dimensions appropriées en fonction du résultat à obtenir, en principe une toile empêchant l'adhérence du reste du moule et sur elles une couche de peinture du type gel, de la couleur désirée dans chacun des cas, en la laissant sécher à la température ambiente, sur laquelle on applique ultérieurement une couche de fibre en verre avec du polyester à épaisseur régulière et homogène sur toute la surface.

2.- Procédé de fabrication de couvertures pour des toitures de grandes surfaces, suivant la revendication n° 1, caractérisé dans une deuxième étape et sans interruption, par la mise en place sur une couche de fibre en verre, une autre de matériau textil pressuré et d'une épaisseur considérable, sur laquelle est placée à nouveau une autre couche de fibre en verre similaire à la première.

3.- Procédé de fabrication de couvertures pour des toitures de grandes surfaces, suivant la revendication n° 1 et n° 2, caractérisé parce que dans tous les éléments qu'on applique, sont compris les moyens de séchage et de durcissement, dans des quantités et proportions en fonction des caractéristiques et la solidité nécessaires à chacun des cas ainsi que le nombre du couches à employer en raison des résultats à obtenir.

4.- PROCEDE DE FABRICATION DE COUVERTURES POUR DES TOITURES DE GRANDES SURFACES.
Tel que décrit et revendiqué dans le présente Rapport descriptif comprenant 5 feuilles foliées et dactylographiées d'un seul côté et d'un plan l'illustrant.